# EUROPEAN PATENT APPLICATION

(11) **EP 4 067 085 A1**
(43) Date of publication of application: **05.10.2022**
(21) Application number: 20894230.0
(22) Date of filing: 12.11.2020
(51) Int. Cl.: B41J 2/01, C09D 11/32, C09D 11/328, C09D 11/40, B41M 5/00

(54) **AQUEOUS INK COMPOSITION, INKSET, PRINTED MATTER, AND METHOD FOR MANUFACTURING PRINTED MATTER**

(30) Priority: 29.11.2019 JP 2019216579
(71) Applicant: DIC Corporation, Tokyo 174-8520 (JP)
(72) Inventor: ICHIKAWA Ryota, Kitaadachi-gun, Saitama 362-8577 (JP); NIO Takahiro, Kitaadachi-gun, Saitama 362-8577 (JP); FUKUI Saki, Kitaadachi-gun, Saitama 362-8577 (JP); GOUDA Keigo, Kitaadachi-gun, Saitama 362-8577 (JP)
(74) Representative: TBK
(86) International application number: PCT/JP2020/042179
(87) International publication number: WO 2021/106586

(57) **Abstract**

Provided is an aqueous inkjet ink with which the granularity of an ink coating caused in printing on a less-ink-absorbent or non-ink-absorbent recording medium is reduced while sufficient image fastness is achieved even in printing on an ink-absorbent recording medium. The present invention relates to an aqueous ink composition for use in an inkjet recording method. The aqueous ink composition contains an aqueous medium, a pigment, and a dye, and a combination of the pigment and the dye is a predetermined combination.

## Description

### Technical Field

The present invention relates to an aqueous ink composition, an ink set, a printed material, and a method of producing a printed material.

### Background Art

Inkjet recording is a recording method in which ink droplets are ejected from extremely fine nozzles directly onto a recording material and attached thereto to form characters and images. This method is advantageous in that devices used produce less noise and are easy to handle. Moreover, with this method, color printing is easy. The inkjet recording method is therefore used not only in output machines in offices and homes but also in industrial applications.

Inks for the inkjet recording method (inkjet inks) include solvent inks, UV inks, and aqueous inks. Among these, the demand for aqueous inks is increasing in the background of environmental awareness (see, for example, PTL 1) .

### Citation List

### Patent Literature

PTL 1: Japanese Unexamined Patent Application Publication No. 2011-12226

### Summary of Invention

### Technical Problem

In recent years, the inkjet recording method has been expected to be used in a wider range of applications, and there has been a growing need for printing with aqueous inkjet inks not only on ink-absorbent recording media such as plain paper but also on less-ink-absorbent recording media or non-ink-absorbent recording media such as coated cardboard lined with coated paper.

However, when a less-ink-absorbent or non-ink-absorbent recording medium is printed with an aqueous inkjet ink, the ink is repelled on the recording medium, causing the dots to combine, resulting in granular unevenness (granularity) of the ink coating. The inventors of the present invention have conducted elaborate studies and found that the granularity can be reduced by using a pigment and a dye in combination as a color material, but in this case, it is difficult to obtain sufficient image fastness in printing on an ink-absorbent recording medium such as plain paper, and the ink coating sometimes peels off from the recording medium under the influence of friction, moisture, and the like.

An object of the present invention is to provide an aqueous inkjet ink with which the granularity of an ink coating caused in printing on a less-ink-absorbent or non-ink-absorbent recording medium is reduced while sufficient image fastness is achieved even in printing on an ink-absorbent recording medium.

### Solution to Problem

An aspect of the present invention is directed to an aqueous ink composition for use in an inkjet recording method. The aqueous ink composition contains an aqueous medium, a pigment, and a dye, in which a combination of the pigment and the dye is a combination of a black pigment and at least one black dye selected from the group consisting of Acid Black 2, Acid Black 52, and Direct Black 154, or a combination of a cyan pigment and at least one blue dye selected from the group consisting of Acid Blue 90, Acid Blue 104, Acid Blue 317, Direct Blue 301, Acid Blue 83, Acid Blue 103, Acid Blue 113, and Acid Blue 123, or a combination of a magenta pigment and at least one red dye selected from the group consisting of Acid Violet 48, Acid Red 80, Acid Red 97, Acid Red 151, Acid Red 249, Acid Red 289, and Acid Red 94, or a combination of a yellow pigment and at least one yellow dye selected from the group consisting of Acid Yellow 42, Acid Yellow 17, and Acid Yellow 40.

With the aqueous ink composition according to the above aspect, the granularity of an ink coating caused in printing on a less-ink-absorbent or non-ink-absorbent recording medium is reduced while sufficient image fastness is achieved even in printing on an ink-absorbent recording medium.

When the combination of the pigment and the dye is a combination of a black pigment and a black dye, that is, a black aqueous ink composition, the black pigment is preferably C.I. Pigment Black 7.

When the combination of the pigment and the dye is a combination of a cyan pigment and a blue dye, that is, a blue aqueous ink composition, the cyan pigment is preferably C.I. Pigment Blue 15:3.

When the combination of the pigment and the dye is a combination of a magenta pigment and a red dye, that is, a red aqueous ink composition, the magenta pigment is preferably C.I. Pigment Red 122.

When the combination of the pigment and the dye is a combination of a yellow pigment and a yellow dye, that is, a yellow aqueous ink composition, the yellow pigment is preferably C.I. Pigment Yellow 74.

Preferably, the dye has an amount of 0.25 to 1.0% by mass of a total amount of the aqueous ink composition.

Preferably, the aqueous ink composition according to the above aspect further contains an acid-modified polypropylene resin.

Preferably, the aqueous ink composition according to the above aspect further contains an oxidized polyethylene wax. In this case, the melting point of the oxidized polyethylene wax is preferably 140°C or lower.

Preferably, the aqueous ink composition according to the above aspect further contains an acetylene-based surfactant.

Another aspect of the present invention is directed to an ink set including a black aqueous ink composition, a blue aqueous ink composition, a red aqueous ink composition, and a yellow aqueous ink composition in the aqueous ink composition according to the above aspect. In this ink set, the black pigment is preferably C.I. Pigment Black 7, the cyan pigment is preferably C.I. Pigment Blue 15:3, the magenta pigment is preferably C.I. Pigment Red 122, and the yellow pigment is preferably C.I. Pigment Yellow 74.

Another aspect of the present invention is directed to a printed material made by printing the aqueous ink composition on a surface of a recording medium.

Another aspect of the present invention is directed to a method of producing a printed material, the method including ejecting and printing the aqueous ink composition on a recording medium by an inkjet recording method in which the distance from a surface (x) having ink ejection holes of an inkjet head to a position (y) where a normal to the surface (x) intersects the recording medium is 1 mm or more. Advantageous Effects of Invention

The present invention can provide an aqueous inkjet ink with which the granularity of an ink coating caused in printing on a less-ink-absorbent or non-ink-absorbent recording medium is reduced while sufficient image fastness is achieved even in printing on an ink-absorbent recording medium.

### Description of Embodiments

Preferred embodiments of the present invention will be described below. However, the present invention is not intended to be limited by the following embodiments. In the present description, a numerical range indicated with "to" indicates a range that includes the numerical values listed before and after "to" as the minimum and maximum values, respectively. Upper limits and lower limits listed individually may be combined as desired. The term "aqueous ink composition" means that the water content in the total solvent in the ink composition is 40% by mass or more and that a water-insoluble solvent having a solubility in water at 20°C of less than 0.5 g/100 mL (in the amount of 1% by mass or less of the total amount of the solvent) is substantially not included.

### (Aqueous Ink Composition)

An aqueous ink composition in an embodiment is an aqueous ink composition for use in an inkjet recording method (also referred to herein as "aqueous inkjet ink") and contains a color material and an aqueous medium. The color material includes a pigment and a dye in any combination of (1) to (4) listed below. The combination of (1) is called a black aqueous ink composition, the combination of (2) is called a blue aqueous ink composition, the combination of (3) is called a red aqueous ink composition, and the combination of (4) is called a yellow aqueous ink composition.
(1) A combination of a black pigment and at least one black dye selected from the group consisting of Acid Black 2, Acid Black 52, and Direct Black 154
(2) A combination of a cyan pigment and at least one blue dye selected from the group consisting of Acid Blue 90, Acid Blue 104, Acid Blue 317, Direct Blue 301, Acid Blue 83, Acid Blue 103, Acid Blue 113, and Acid Blue 123
(3) A combination of a magenta pigment and at least one red dye selected from the group consisting of Acid Violet 48, Acid Red 80, Acid Red 97, Acid Red 151, Acid Red 249, Acid Red 289, and Acid Red 94
(4) A combination of a yellow pigment and at least one yellow dye selected from the group consisting of Acid Yellow 42, Acid Yellow 17, and Acid Yellow 40

With the aqueous ink composition described above, the granularity of an ink coating caused in printing on a less-ink-absorbent or non-ink-absorbent recording medium is reduced while sufficient image fastness is achieved even in printing on an ink-absorbent recording medium. The aqueous ink composition therefore tends to form an ink coating that is excellent in image fastness and even and uniform, regardless of the ink absorbency of recording media.

As described above, the ink composition in the present embodiment is applicable not only to ink-absorbent recording media but also to less-ink-absorbent or non-ink-absorbent recording media. Examples of the ink-absorbent recording media include recording media such as copy paper (PPC paper) commonly used in copiers and recording media with an ink absorption layer.

As used herein "less-ink-absorbent" means that the amount of water absorbed by a recording medium in a contact time of 100 msec between the recording surface of the recording medium and water is 10 g/m² or less, and "non-ink-absorbent" means that the amount of water absorbed is 0 g/m². The amount of water absorbed is the amount of water transferred in a contact time of 100 msec with pure water as measured at 23°C and 50% relative humidity using an automatic scanning liquid absorptometer (KM500win available from KUMAGAI RIKI KOGYO Co., Ltd.). The measurement conditions are as follows.

### [Spiral Method]

Contact Time: 0.010 to 1.0 (sec)
Pitch: 7 (mm)
Length per sampling: 86.29 (degree)
Start Radius: 20 (mm)
End Radius: 60 (mm)
Min Contact Time: 10 (ms)
Max Contact Time: 1000 (ms)
Sampling Pattern: 50
Number of sampling points: 19

### [Square Head]

Slit Span: 1 (mm)
Width: 5 (mm)

Examples of the less-ink-absorbent or non-ink-absorbent recording media include cardboard having a surface with a colored layer less absorbing a solvent in ink, art paper such as printing stock, coated paper, lightweight coated paper, slightly coated paper, and plastic films.

The aqueous ink composition may further contain a binder resin and/or a wax, in addition to the color material and the aqueous medium. In the aqueous ink composition, the color material, the binder resin, and the wax are preferably present in a dispersed or dissolved state in the aqueous medium that is a solvent.

The kind of the binder resin and the kind of the wax are not limited, but preferably, the binder resin contains an acid-modified polypropylene resin and the wax contains an oxidized polyethylene wax. When the aqueous ink composition contains an acid-modified polypropylene resin and an oxidized polyethylene wax, the ink fixability (setting properties) and image fastness to a recording medium immediately after printing tend to be improved in printing on a less-ink-absorbent or non-ink-absorbent recording medium. In printing with the aqueous inkjet ink on a less-ink-absorbent or non-ink-absorbent recording medium, it is preferable to suppress occurrence of density unevenness of an ink coating, called "mottling", and to suppress occurrence of streaky print defects, called "white streaks", in addition to achieving high setting properties and image fastness described above. When the aqueous ink composition contains an acid-modified polypropylene resin and an oxidized polyethylene wax, the occurrence of mottling and white streaks can be suppressed by adjusting the amount of the acid-modified polypropylene resin.

The components contained in the aqueous ink composition will be described in detail below, taking an aqueous ink composition containing a pigment, a dye, an acid-modified polypropylene resin, and an oxidized polyethylene wax as an example.

### [Color Material]

The color material includes a pigment and a dye. The pigment may be coated with resin. In other words, a colorant in which the pigment is coated with resin can also be used as the color material.

The pigment is a black pigment, a cyan pigment, a magenta pigment, or a yellow pigment. Organic pigments and inorganic pigments commonly used in aqueous gravure inks or aqueous inkjet inks can be used as these pigments. The pigment may include one or both of an organic pigment and an inorganic pigment. Either an acid-untreated pigment or an acid-treated pigment can be used as the pigment.

Examples of the inorganic pigment that can be used include iron oxide and carbon black produced by a method such as a contact method, a furnace method, or a thermal method.

Examples of the organic pigment that can be used include azo pigments (azo lakes, insoluble azo pigments, condensed azo pigments, chelate azo pigments, etc.), polycyclic pigments (e.g., phthalocyanine pigments, perylene pigments, perinone pigments, anthraquinone pigments, quinacridone pigments, dioxazine pigments, thioindigo pigments, isoindolinone pigments, quinophthalone pigments, etc.), lake pigments (e.g., basic dye-type chelates, acid dye-type chelates, etc.), nitro pigments, nitroso pigments, and aniline black.

Examples of the pigment that can be used in black ink (black pigment) include C.I. Pigment Black 1, 6, 7, 8, 10, 26, 27, and 28. Among these, C.I. Pigment Black 7 is preferably used. Specific examples of the black pigment include No. 2300, No. 2200B, No. 900, No. 960, No. 980, No. 33, No. 40, No. 45, No. 45L, No. 52, HCF88, MA7, MA8, MA100, and the like from Mitsubishi Chemical Corporation; Raven 5750, Raven 5250, Raven 5000, Raven 3500, Raven 1255, Raven 700, and the like from Columbian Chemicals Company; Regal 400R, Regal 330R, Regal 660R, Mogul L, Mogul 700, Monarch 800, Monarch 880 Monarch 900, Monarch 1000, Monarch 1100, Monarch 1300, Monarch 1400, and the like from Cabot Corporation; Color Black FW1, Color Black FW2, Color Black FW2V, Color Black FW18, Color Black FW200, Color Black S150, Color Black S160, Color Black S170, Printex 35, Printex U, Printex V, Printex 1400U, Special Black 6, Special Black 5, Special Black 4, Special Black 4A, NIPEX 150, NIPEX 160, NIPEX 170, NIPEX 180, and the like from Degussa AG.

Specific examples of the pigment that can be used in cyan ink (cyan pigment) include C.I. Pigment Blue 1, 2, 3, 15, 15:3, 15:4, 15:6, 16, 22, 60, 63, and 66. Among these, C.I. Pigment Blue 15:3 is preferably used.

Examples of the pigment that can be used in magenta ink (magenta pigment) include C.I. Pigment Red 5, 7, 12, 48 (Ca), 48 (Mn), 57 (Ca), 57:1, 112, 122, 123, 146, 176, 184, 185, 202, 209, 269, and 282; and C.I. Pigment Violet 19. Among these, C.I. Pigment Red 122 is preferably used.

Examples of the pigment that can be used in yellow ink (yellow pigment) include C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185. Among these, C.I. Pigment Yellow 74 is preferably used.

Preferably, the pigment undergoes a step for dispersing well in an aqueous medium in order to be stably present in ink. For example, a dispersibility-imparting group (a hydrophilic functional group and/or a salt thereof) or an active species having a dispersibility-imparting group may be bonded (grafted) directly or indirectly via an alkyl group, an alkyl ether group, an aryl group, or the like to the surface of the pigment. Such a self-dispersing pigment can be produced, for example, by vacuum plasma treatment, oxidation treatment with a hypohalous acid and/or a hypohalite, ozone oxidation treatment, or a wet oxidation process in which the pigment surface is oxidized by an oxidant in water, or by bonding a carboxy group via a phenyl group by bonding p-aminobenzoic acid to the pigment surface.

When a self-dispersing pigment is used, the inclusion of a pigment dispersant is unnecessary, and, therefore, foaming and the like resulting from a pigment dispersant can be suppressed and an aqueous ink composition with high ejection stability is easily obtained. Furthermore, when a self-dispersing pigment is used, significant increase in viscosity resulting from a pigment dispersant can be suppressed, and, therefore, a larger amount of pigment can be contained, and a printed material with high printing density is easily produced. A commercially available product can be used as the self-dispersing pigment. Examples of the commercially available product include Micro Jet CW-1 (product name; available from ORIENT CHEMICAL INDUSTRIES CO., LTD.), and CAB-O-JET 200 and CAB-O-JET 300 (product names; available from Cabot Corporation).

The amount of the pigment is, for example, 1% by mass or more and may be 2% by mass or more of the total amount of the aqueous ink composition, in terms of ensuring a sufficient printing density. The amount of the pigment is, for example, 15% by mass or less and may be 10% by mass or less of the total amount of the aqueous ink composition, in terms of easily suppressing the occurrence of streaks and in terms of easily achieving more excellent image fastness while keeping high dispersion stability of the color material. In these respects, the amount of the black pigment may be 1 to 15% by mass of the total amount of the aqueous ink composition.

The black dye is at least one selected from the group consisting of Acid Black 2, Acid Black 52, and Direct Black 154, and preferably includes Acid Black 52 in terms of water resistance. These dyes may be used in combination as the black dye. The black dye may include a dye other than these dyes but preferably mainly includes these dyes. The amount of these dyes is, for example, 60% by mass or more and may be 70% by mass or more of the total amount of the black dye.

The blue dye is at least one selected from the group consisting of Acid Blue 90, Acid Blue 104, Acid Blue 317, Direct Blue 301, Acid Blue 83, Acid Blue 103, Acid Blue 113, and Acid Blue 123, and preferably includes at least one selected from the group consisting of Acid Blue 317, Direct Blue 301, Acid Blue 113, and Acid Blue 123 in terms of water resistance. These dyes may be used in combination as the blue dye. The blue dye may include a dye other than these dyes but preferably mainly includes these dyes. The amount of these dyes is, for example, 60% by mass or more and may be 70% by mass or more of the total amount of the blue dye.

The red dye is at least one selected from the group consisting of Acid Violet 48, Acid Red 80, Acid Red 97, Acid Red 151, Acid Red 249, Acid Red 289, and Acid Red 94, and preferably includes at least one selected from the group consisting of Acid Violet 48, Acid Red 289, and Acid Red 94 in terms of water resistance. These dyes may be used in combination as the red dye. The red dye may include a dye other than these dyes but preferably mainly includes these dyes. The amount of these dyes is, for example, 60% by mass or more and may be 70% by mass or more of the total amount of the red dye.

The yellow dye is at least one selected from the group consisting of Acid Yellow 42, Acid Yellow 17, and Acid Yellow 40, and these dyes may be used in combination as the yellow dye. The yellow dye may include a dye other than these dyes but preferably mainly includes these dyes. The amount of these dyes is, for example, 60% by mass or more and may be 70% by mass or more of the total amount of the yellow dye.

The amount of the dye is preferably 0.1% by mass or more and more preferably 0.25% by mass or more of the total amount of the aqueous ink composition, in terms of ensuring a sufficient printing density and in terms of further reducing the granularity. The amount of the dye is preferably 2.0% by mass or less and more preferably 1.0% by mass or less of the total amount of the aqueous ink composition, in terms of further improving image fastness (particularly image fastness in printing on an ink-absorbent recording medium). In these respects, the amount of the dye is preferably 0.1 to 2.0% by mass and more preferably 0.25 to 1.0% by mass of the total amount of the aqueous ink composition.

The amount of the color material is, for example, 1% by mass or more and may be 2% by mass or more of the total amount of the aqueous ink composition, in terms of ensuring a sufficient printing density. The amount of the color material is, for example, 17% by mass or less and may be 15% by mass or less or 10% by mass or less of the total amount of the aqueous ink composition, in terms of easily suppressing the occurrence of streaks and in terms of easily achieving more excellent image fastness while keeping high dispersion stability of the color material. In these respects, the amount of the color material may be 1 to 17% by mass of the total amount of the aqueous ink composition.

### [Aqueous Medium]

The aqueous medium is, for example, water. Specifically, pure water or ultrapure water, such as ion-exchange water, ultra-filtrated water, reverse osmosis water, and distilled water can be used. The amount of the aqueous medium is, for example, 30 to 90% by mass or 40 to 80% by mass of the total amount of the aqueous ink composition, in terms of achieving more excellent setting properties and in terms of easily achieving high ejection stability. The amount of the aqueous medium may be 30% by mass or more or 40% by mass or more, and may be 90% by mass or less or 80% by mass or less of the total amount of the aqueous ink composition.

The aqueous ink composition may contain a solvent component other than water (e.g., a water-soluble organic solvent), for example, for adjustment of viscosity. However, when a mixed solvent of water and a solvent component other than water (e.g., a water-soluble organic solvent) is used, the amount of water in the total solvent is 40% by mass or more and may be 50% by mass or more. The water-soluble organic solvent may be a known water-soluble organic solvent used for inkjet inks.

### [Acid-Modified Polypropylene Resin]

The acid-modified polypropylene resin is a resin obtained by modifying polypropylene with one or two or more acid compounds and has a polypropylene-derived backbone (polypropylene backbone) and an acid compound-derived functional group. The polypropylene backbone has a structural unit mainly derived from propylene.

The polypropylene backbone may be a homopolypropylene (a monopolymer of propylene) backbone, may be a block polypropylene (a block copolymer of propylene and another olefin (e.g., ethylene)) backbone, or may be a random polypropylene (a random copolymer of propylene and another olefin (e.g., ethylene)) backbone. Examples of the other olefin include alkenes such as ethylene, isobutylene, 1-butene, 1-pentene, and 1-hexene. These components may be linear or branched. The carbon number of the other olefin component is, for example, 2 to 6.

The amount of the propylene component (the amount of the structural unit derived from propylene) in the polypropylene backbone is, for example, 60 mol% or more, and may be 70 mol% or more. When the polypropylene backbone is a block polypropylene backbone or a random polypropylene backbone, the amount of the propylene component (the amount of the structural unit derived from propylene) in the polypropylene backbone is, for example, 95 mol% or less, and may be 90 mol% or less.

The amount of the polypropylene backbone in the acid-modified polypropylene resin is, for example, 50 to 99% by mass of the total amount of the acid-modified polypropylene resin. The amount of the polypropylene backbone in the acid-modified polypropylene resin may be 50% by mass or more, 60% by mass or more, or 70% by mass or more, and may be 99% by mass or less, 95% by mass or less, or 90% by mass or less of the total amount of the acid-modified polypropylene resin.

The acid compound is, for example, a compound having an acid group such as a carboxy group and an acid anhydride group, or a derivative thereof. The derivative refers to a compound obtained by modifying (e.g., esterifying, amidating, or imidating) the acid group of the compound having an acid group. The number of acid groups in the acid compound may be one or more (e.g., two). Examples of the acid compound include unsaturated carboxylic acids, unsaturated carboxylic anhydrides, and derivatives thereof. Specifically, examples include (meth)acrylic acid, maleic acid, maleic anhydride, fumaric acid, citraconic acid, citraconic anhydride, mesaconic acid, itaconic acid, itaconic anhydride, aconitic acid, aconitic anhydride, and hymic anhydride, and derivatives of these compounds. Examples of the derivatives include compounds having at least one (meth)acryloyl group in the molecule of methyl (meth)acrylate, ethyl (meth)acrylate, and the like. The term (meth)acrylic means acrylic or methacrylic. This is applicable to (meth)acrylate and (meth)acryloyl. The acid compound is preferably a compound having an acid group.

The degree of acid modification (e.g., graft weight) in the acid-modified polypropylene resin is, for example, 1 to 20% by mass. The degree of acid modification in the acid-modified polypropylene resin may be 1% by mass or more or 3% by mass or more, and may be 20% by mass or less or 10% by mass or less. The degree of acid modification and the graft weight can be determined by alkalimetry or Fourier transform infrared spectroscopy.

An example of the method of acid modification is graft modification of polypropylene. Specific examples include a method in which polypropylene is heated and melted to the melting point or higher to react in the presence of a radical reaction initiator (melting method), and a method in which polypropylene is dissolved in an organic solvent and then heated and stirred in the presence of a radical reaction initiator to react (solution method). Examples of the radial reaction initiator include organic peroxide compounds and azonitriles.

The acid-modified polypropylene resin may be chlorinated. A chlorination reaction can be performed by conventionally known methods.

The weight average molecular weight of the acid-modified polypropylene resin is, for example, 10,000 to 200,000. The weight average molecular weight of the acid-modified polypropylene resin may be 10,000 or more, 15,000 or more, or 40,000 or more, and may be 200,000 or less, 150,000 or less, or 120,000 or less. The weight average molecular weight is the value measured by gel permeation chromatography (standard material: polystyrene).

The melting point (Tm₁) of the acid-modified polypropylene resin is, for example, 50 to 150°C. When the melting point (Tm₁) of the acid-modified polypropylene resin is in this range, more excellent setting properties and image fastness tend to be achieved. The melting point (Tm₁) of the acid-modified polypropylene resin is preferably lower than the melting point of the oxidized polyethylene wax. The melting point (Tm₁) is the value measured by a melting point measuring device in compliance with JIS K 0064.

The acid-modified polypropylene resin is, for example, in the particulate form. The average particle size of the particulate acid-modified polypropylene resin is, for example, 10 to 200 nm in terms of preventing clogging of inkjet heads. The average particle size of the particulate acid-modified polypropylene resin may be 10 nm or more or 20 nm or more, and may be 200 nm or less or 170 nm or less. The average particle size is the d50 diameter in the volume-based particle size distribution as measured by a laser scattering method using a laser scattering particle size analyzer (e.g., Microtrac).

The acid-modified polypropylene resin is preferably used in a dissolved or dispersed state in a solvent and more preferably used in a state of emulsion dispersed in a solvent. The solvent is preferably an aqueous medium and more preferably the same aqueous medium as the aqueous medium used in the solvent of the aqueous ink composition. When such a dispersion is used, the pH of the dispersion is, for example, 6 to 10 at a liquid temperature of 25°C in terms of facilitating dispersion of the acid-modified polypropylene resin in the solvent and improving storage stability. To keep the pH in this range, the dispersion may contain an amine neutralizer such as ammonia water, triethylamine, triethanolamine, dimethylaminoethanol, or morpholine, or an inorganic base such as sodium hydroxide or potassium hydroxide.

The acid-modified polypropylene resin can be used singly or in combination of two or more.

A commercially available product can be used as the acid-modified polypropylene resin. Examples of preferred commercially available products include AUROREN (registered trademark) AE-301 and AE-502 from Nippon Paper Industries Co., Ltd.

The amount of the acid-modified polypropylene resin is preferably 3% by mass or less and may be 2.5% by mass or less or 2% by mass or less of the total amount of the aqueous ink composition, in terms of suppressing the occurrence of mottling and white streaks in printing on a less-ink-absorbent or non-ink-absorbent recording medium. The amount of the acid-modified polypropylene resin is preferably 0.5% by mass or more and may be 0.75% by mass or more or 1% by mass or more of the total amount of the aqueous ink composition, in terms of achieving more excellent setting properties. In these respects, the amount of the acid-modified polypropylene resin is preferably 0.5 to 3% by mass of the total amount of the aqueous ink composition.

The amount of the acid-modified polypropylene resin is preferably 300 parts by mass or less and may be 150 parts by mass or less or 100 parts by mass or less per 100 parts by mass of the color material, in terms of suppressing the occurrence of mottling and white streaks in printing on a less-ink-absorbent or non-ink-absorbent recording medium. The amount of the acid-modified polypropylene resin is preferably 8 parts by mass or more and may be 12 parts by mass or more or 16 parts by mass or more per 100 parts by mass of the color material, in terms of achieving more excellent setting properties. In these respects, the amount of the acid-modified polypropylene resin is preferably 8 to 300 parts by mass per 100 parts by mass of the color material.

Although the aqueous ink composition may contain a resin other than the acid-modified polypropylene resin as the binder resin, the amount of the acid-modified polypropylene resin per 100 parts by mass of the total binder resin is preferably 80 parts by mass or more and may be 90 parts by mass or more, 95 parts by mass or more, or 100 parts by mass.

### [Oxidized Polyethylene Wax]

The oxidized polyethylene wax is made by oxidation of polyethylene wax and has a polyethylene-derived backbone (polyethylene backbone). The polyethylene backbone has a structural unit mainly derived from ethylene.

The polyethylene backbone may be a homopolyethylene (a monopolymer of ethylene) backbone, may be a block polyethylene (a block copolymer of ethylene and another olefin) backbone, or may be a random polyethylene (a random copolymer of ethylene and another olefin) backbone. Examples of the other olefin include alkenes such as propylene, isobutylene, 1-butene, 1-pentene, and 1-hexene. These components may be linear or branched. The carbon number of the other olefin component is, for example, 2 to 6.

The amount of the ethylene component (the amount of the structural unit derived from ethylene) in the polyethylene backbone is, for example, 60 mol% or more, and may be 70 mol% or more. When the polyethylene backbone is a block polyethylene backbone or a random polyethylene backbone, the amount of the ethylene component (the amount of the structural unit derived from ethylene) in the polyethylene backbone is, for example, 95 mol% or less, and may be 90 mol% or less.

The amount of the polyethylene backbone in the oxidized polyethylene wax is, for example, 50 to 99% by mass of the total amount of the oxidized polyethylene wax. The amount of the polyethylene backbone in the oxidized polyethylene wax may be 50% by mass or more, 60% by mass or more, or 70% by mass or more, and may be 99% by mass or less, 95% by mass or less, or 90% by mass or less of the total amount of the oxidized polyethylene wax.

The oxidized polyethylene wax preferably includes high-density oxidized polyethylene wax in terms of achieving more excellent image fastness. In the present embodiment, by the synergistic effect of using the acid-modified polypropylene resin and the high-density oxidized polyethylene wax in combination, more excellent setting properties and image fastness and more excellent mottling-suppressing effect tend to be achieved. The density of the high-density oxidized polyethylene wax is, for example, 0.95 g/cm³ or higher and may be 0.95 to 1.1 g/cm³.

The melting point (Tm₂) of the oxidized polyethylene wax is, for example, 160°C or lower, preferably 140°C or lower, and may be 135°C or lower or 130°C or lower. The melting point (Tm₂) of the oxidized polyethylene wax is, for example, 40°C or higher, preferably 120°C or higher, and more preferably 125°C or higher. The melting point (Tm₂) is the value measured by a melting point measuring device in compliance with JIS K 0064.

The oxidized polyethylene wax is, for example, in the particulate form. The average particle size of the particulate oxidized polyethylene wax is, for example, 10 to 200 nm in terms of preventing clogging of inkjet heads. The average particle size of the particulate oxidized polyethylene wax may be 20 nm or more or 30 nm or more, and may be 100 nm or less or 60 nm or less. The average particle size is the d50 diameter in the volume-based particle size distribution as measured by a laser scattering method using a laser scattering particle size analyzer (e.g., Microtrac).

The oxidized polyethylene wax is preferably used in a dissolved or dispersed state in a solvent and more preferably used in a state of emulsion dispersed in a solvent. The solvent is preferably an aqueous medium and more preferably the same aqueous medium as the aqueous medium used in the solvent of the aqueous ink composition.

The oxidized polyethylene wax can be used singly or in combination of two or more.

A commercially available product can be used as the oxidized polyethylene wax. Examples of preferred commercially available products include AQUACER 515 and AQUACER 1547 available from BYK-Chemie GmbH.

The amount of the oxidized polyethylene wax is preferably 0.1% by mass or more, and may be 0.2% by mass or more or 0.3% by mass or more of the total amount of the aqueous ink composition in terms of excellent image fastness. The amount of the oxidized polyethylene wax is, for example, 5% by mass or less, and may be 3% by mass or less or 2% by mass or less of the total amount of the aqueous ink composition, in terms of easily achieving sufficient ejection stability. In these respects, the amount of the oxidized polyethylene wax may be 0.1 to 5% by mass of the total amount of the aqueous ink composition.

The amount of the oxidized polyethylene wax is preferably 1.6 parts by mass or more, and may be 4 parts by mass or more or 6 parts by mass or more per 100 parts by mass of the color material in terms of excellent image fastness. The amount of the oxidized polyethylene wax is, for example, 500 parts by mass or less, and may be 350 parts by mass or less or 200 parts by mass or less per 100 parts by mass of the color material, in terms of easily achieving sufficient ejection stability. In these respects, the amount of the oxidized polyethylene wax may be 1.6 to 500 parts by mass per 100 parts by mass of the color material.

The ratio of the amount of the oxidized polyethylene wax to the amount of the acid-modified polypropylene resin (the amount of the oxidized polyethylene wax/the amount of the acid-modified polypropylene resin) is, for example, 0.03 to 10 in terms of more excellent setting properties and image fastness and suppressing mottling more. The ratio may be 0.03 or more, 0.1 or more, 0.2 or more, or 0.3 or more, and may be 10 or less, 2.0 or less, or 1.5 or less. In the present embodiment, in particular, the ratio of the amount of the oxidized polyethylene wax to the amount of the high-density acid-modified polypropylene resin is preferably in the above range.

The aqueous ink composition may contain a wax other than the oxidized polyethylene wax as the wax. However, the amount of the oxidized polyethylene wax per 100 parts by mass of the total wax is preferably 80 parts by mass or more, and may be 90 parts by mass or more, 95 parts by mass or more, or 100 parts by mass.

### [Other Components]

In addition to the components described above, the aqueous ink composition may further include other additives such as a surfactant, a pigment dispersant, a wetting agent (drying retarder), a penetrating agent, a preservative, a viscosity adjuster, a pH adjuster, a chelating agent, a plasticizer, an antioxidant, and a UV absorber, if necessary.

The use of a surfactant facilitates prevention of the occurrence of streaky print defects, for example, because the droplets of the aqueous ink composition ejected from the ejection holes of inkjet heads spread on a surface well after landing on a material to be printed. Furthermore, the use of a surfactant can reduce the surface tension of the aqueous ink composition, for example, thereby improving the leveling properties of the aqueous ink composition.

Examples of the surfactant that can be used include anionic surfactants, nonionic surfactants, cationic surfactants, and amphoteric surfactants. The surfactant is preferably one or more selected from the group consisting of anionic surfactants and nonionic surfactants in terms of easily suppressing the occurrence of streaky print detects.

Examples of the anionic surfactants include alkyl benzene sulfonates, alkyl phenyl sulfonates, alkyl naphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples of these include dodecyl benzene sulfonates, isopropylnaphthalene sulfonates, monobutylphenylphenol monosulfonates, monobutylbiphenyl sulfonates, and dibutylphenylphenol disulfonates.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerol fatty acid esters, polyoxyethylene glycerol fatty acid esters, polyglycerol fatty acid esters, sucrose fatty acid esters, polyoxyethylene alkylamines, polyoxyethylene fatty acid amides, fatty acid alkylolamides, alkyl alkanolamides, acetylene glycols, oxyethylene adducts of acetylene glycols, and polyethylene glycol-polypropylene glycol block copolymers. Among these, one or more selected from the group consisting of polyoxyethylene nonylphenyl ethers, polyoxyethylene octylphenyl ethers, polyoxyethylene dodecylphenyl ethers, polyoxyethylene alkyl ethers, polyoxyethylene fatty acid esters, sorbitan fatty acid esters, polyoxyethylene sorbitan fatty acid esters, fatty acid alkylolamides, acetylene glycols, oxyethylene adducts of acetylene glycols, and polyethylene glycol-polypropylene glycol block copolymers are preferred.

Preferably, the aqueous ink composition contains an acetylene-based surfactant in terms of easily suppressing the occurrence of streaky print detects. The acetylene-based surfactant is a surfactant having an acetylene structure in the molecule. The acetylene-based surfactant preferably includes one or more selected from the group consisting of acetylene glycols and oxyethylene adducts of acetylene glycols in terms of easily suppressing the occurrence of streaky print defects.

The amount of the acetylene-based surfactant is preferably 80 to 100% by mass, more preferably 85 to 99.9% by mass, even more preferably 90 to 99.5% by mass, and particularly preferably 95 to 99.3% by mass of the total amount of the surfactant, in terms of easily suppressing the occurrence of streaky print detects.

Examples of other surfactants that can be used include silicone surfactants such as polysiloxane oxyethylene adducts; fluorosurfactants such as perfluoroalkyl carboxylates, perfluoroalkyl sulfonates, and oxyethylene perfluoroalkyl ethers; and biosurfactants such as spiculisporic acid, rhamnolipid, and lysolecithin.

The amount of the surfactant is preferably 0.001 to 5% by mass, more preferably 0.001 to 3% by mass, even more preferably 0.001 to 2% by mass, particularly preferably 0.01 to 2% by mass, extremely preferably 0.1 to 2% by mass, very preferably 0.5 to 2% by mass, further more preferably 0.8 to 2% by mass, and even more preferably 1 to 1.6% by mass of the total amount of the aqueous ink composition. The ejected droplets of the aqueous ink composition containing a surfactant in such an amount have high wettability of a surface of a material to be printed and sufficiently spread over the material to be printed, thereby easily achieving the effect of preventing the occurrence of streaky print detects. Furthermore, the aqueous ink composition containing a surfactant in the above ranges easily improves the leveling properties of the coating. In this respect, the amount of the acetylene-based surfactant is preferably within the above ranges.

Examples of the pigment dispersant that can be used include polyvinyl alcohols, polyvinyl pyrrolidones, acrylic resins such as acrylic acid-acrylic ester copolymers, styrene-acrylic resins such as styrene-acrylic acid copolymers, styrene-methacrylic acid copolymers, styrene-methacrylic acid-acrylic ester copolymers, styrene-α-methylstyrene-acrylic acid copolymers, and styrene-α-methylstyrene-acrylic acid-acrylic acid ester copolymers, aqueous resins such as styrene-maleic acid copolymers, styrene-maleic anhydride copolymers, and vinylnaphthalene-acrylic acid copolymers, and salts of the aqueous resins. AJISPER PB series available from Ajinomoto Fine Techno Co., Inc., DISPERBYK series available from BYK Japan KK, EFKA series available from BASF SE, Solsperse series available from Lubrizol Japan Limited, TEGO series available from Evonik Industries AG, and the like can be used as the pigment dispersant. The compounds listed as the polymer (G) in WO2018/190139 can also be used as the pigment dispersant.

The wetting agent can be used for preventing the aqueous ink composition from drying at the ejection nozzles of inkjet heads. The wetting agent is preferably the one that is miscible with water and can prevent clogging of ejection holes of inkjet heads. Examples include ethylene glycol, diethylene glycol, triethylene glycol, polyethylene glycol with a molecular weight of 2000 or less, propylene glycol, dipropylene glycol, tripropylene glycol, isopropylene glycol, isobutylene glycol, 1,4-butanediol, 1,3-butanediol, 1,5-pentanediol, 1,6-hexanediol, mesoerythritol, pentaerythritol, and glycerol.

A solid wetting agent can also be used as the wetting agent. Examples of such a wetting agent include urea and urea derivatives. Examples of the urea derivatives include ethylene urea, propylene urea, diethyl urea, thiourea, N,N-dimethyl urea, hydroxyethyl urea, hydroxybutyl urea, ethylenethiourea, and diethylthiourea. These can be used singly or in combination of two or more. Preferably, at least one selected from the group consisting of urea, ethylene urea, and 2-hydroxyethyl urea is used in terms of easily producing a printed material with excellent setting properties.

The amount of the wetting agent may be 3 to 50% by mass of the total amount of the aqueous ink composition.

Examples of the penetrating agent include lower alcohols such as ethanol and isopropyl alcohol; and glycol monoethers such as ethylene glycol monomethyl ether, ethylene glycol monoethyl ether, ethylene glycol monopropyl ether, ethylene glycol monobutyl ether, diethylene glycol monomethyl butyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, tripropylene glycol monopropyl ether, and tripropylene glycol monobutyl ether. The amount of the penetrating agent is preferably 3% by mass or less, more preferably 1% by mass or less of the total amount of the aqueous ink composition, and even more preferably, the aqueous ink composition contains substantially no penetrating agent.

The pH of the aqueous ink composition is preferably 7.0 or higher, more preferably 7.5 or higher, and even more preferably 8.0 or higher in order to improve storage stability and ejection stability of the ink, and to improve wetting, printing density, and abrasion resistance in printing on a less-ink-absorbent or non-ink-absorbent recording medium. The upper limit of pH of the aqueous ink composition is preferably 11.0 or lower, more preferably 10.5 or lower, and even more preferably 10.0 or lower, in order to suppress deterioration of members of an ink-applying or ejecting device (e.g., ink ejection holes, ink channels, etc.) and to reduce the effect of ink adhering to the skin. In these respects, the pH of the aqueous ink composition is preferably 7.0 to 11.0. The above pH is the pH at 25°C.

The viscosity of the aqueous ink composition is, for example, 2 mPa·s or higher and lower than 10 mPa·s at 32°C. When the aqueous ink composition having a viscosity within this range is used in the inkjet recording method, the displacement of ink droplets landing on a recording medium due to flight deflection is alleviated in appearance, and the occurrence of streaks on a printed material tends to be prevented effectively. The aqueous ink composition having a viscosity in this range tends to be excellent in storage stability and ejection stability in the inkjet recording method. The viscosity of the aqueous ink composition at 32°C is preferably 3 mPa·s or higher and more preferably 4 mPa·s or higher. The viscosity of the aqueous ink composition at 32°C is preferably 8 mPa·s or lower and more preferably 7 mPa·s or lower. The viscosity is the value measured, for example, using a cone-and-plate rotational viscometer equivalent to an E-type viscometer, under the following conditions.
Measuring device: TVE-25 viscometer (TVE-25 L available from Toki Sangyo Co., Ltd.)
Standard liquid for calibration: JS20
Measuring temperature: 32°C
Rotation speed: 10 to 100 rpm
Injection volume: 1200 µL

The surface tension of the aqueous ink composition is, for example, 20 to 40 mN/m at 25°C. When the aqueous ink composition having a surface tension within this range is used in the inkjet recording method, the wettability of the ejected droplets with the surface of a recording medium tends to be high, and the droplets tend to sufficiently spread after landing. The surface tension of the aqueous ink composition at 25°C is preferably 25 mN/m or higher and more preferably 27 mN/m or higher. The surface tension of the aqueous ink composition at 25°C is preferably 35 mN/m or lower and more preferably 32 mN/m or lower.

The aqueous ink composition in an embodiment described above can be produced by mixing the components listed above. The components listed above may be mixed in a batch or may be mixed sequentially. For example, the binder resin (e.g., the acid-modified polypropylene resin) and the wax (e.g., the oxidized polyethylene wax) may be dissolved or dispersed in an aqueous medium before mixing. The pigment may be dispersed in an aqueous medium together with a pigment dispersant before mixing. For mixing, a disperser such as a beads mill, an ultrasonic homogenizer, a high-pressure homogenizer, a paint shaker, a ball mill, a roll mill, a sand mill, a sand grinder, Dyno-Mill, DISPERMAT, SC mill, or Nano-Mizer can be used. After mixing, centrifugation, filtration, and the like may be performed if necessary.

The aqueous ink composition in the foregoing embodiment may be stored in separate liquids which can be mixed into an aqueous ink composition.

The black aqueous ink composition, the blue aqueous ink composition, the red aqueous ink composition, and the yellow aqueous ink composition in the aqueous ink composition in the foregoing embodiment may be manufactured or sold as an ink set. As described above, in this ink set, the black pigment is preferably C.I. Pigment Black 7, the cyan pigment is preferably C.I. Pigment Blue 15:3, the magenta pigment is preferably C.I. Pigment Red 122, and the yellow pigment is preferably C.I. Pigment Yellow 74.

### (Printed Material and Method of Producing the Same)

A printed material in an embodiment is a printed material made by printing the aqueous ink composition in the foregoing embodiment on a surface of a recording medium. This printed material has a recording medium and an ink coating printed on a surface of the recording medium. The ink coating formed on the surface of the recording medium is, for example, a dried product of the aqueous ink composition and contains the solid contents in the aqueous ink composition in the foregoing embodiment (e.g., the color material, the acid-modified polypropylene resin, and the oxidized polyethylene wax). The recording medium is, for example, the less-ink-absorbent or non-ink-absorbent recording medium described above and may be an ink-absorbent recording medium. This printed material has sufficient image fastness, whether the recording medium is the less-ink-absorbent or non-ink-absorbent medium described above or the ink-absorbent recording medium.

The printed material is produced, for example, by printing the aqueous ink composition in the foregoing embodiment on a surface of a recording medium by the inkjet recording method. Specifically, the printed material can be produced by ejecting and printing the aqueous ink composition on a recording medium by the inkjet recording method in which the distance from a surface (x) having ink ejection holes of an inkjet head to a position (y) where a normal to the surface (x) intersects the recording medium is 1 mm or more.

### Examples

The invention will be described in more detail below with examples, but the invention is not limited to these examples.

### <Preparation of Resin Dispersion>

### (Preparation Example 1)

A random polypropylene resin (propylene component 75 mol%, ethylene component 5 mol%, butene component 20 mol%, weight average molecular weight 65,000) was produced using a Ziegler-Natta catalyst as a polymerization catalyst.

Subsequently, 100 parts by mass of the resulting random polypropylene resin, 6 parts by mass of maleic anhydride, 3 parts by mass of ethyl methacrylate, and 1.5 parts by mass of di-t-butyl peroxide were blended and allowed to react using a twin-screw extruder set at a barrel temperature of 160°C. The extruder was degassed under a reduced pressure to remove any residual unreacted material, yielding an acid-modified polypropylene resin. The resulting acid-modified polypropylene resin had a weight average molecular weight of 55,000, the graft weight of maleic anhydride was 5.2% by mass, the graft weight of di-t-butyl peroxide was 1.3% by mass, and the melting point (Tm₁) was 70°C.

In a four-necked flask equipped with a stirrer, a condenser, a thermometer, and a funnel, 100 g of the resulting acid-modified polypropylene resin, 20 g of polyoxyethylene lauryl ether (surfactant), 10 g of morpholine (neutralizer), and 20 g of toluene (solvent) were added and blended at 120°C for 30 minutes. Then, 290 g of deionized water at 90°C was added over 90 minutes. Subsequently, the solvent was removed under a reduced pressure, and then the mixture was cooled to room temperature while being stirred, yielding a dispersion of the acid-modified polypropylene resin (resin dispersion). The resulting resin dispersion had an average particle size of 151 nm and a pH of 9.0. The concentration of the acid-modified polypropylene resin in the resin dispersion was adjusted to 30% by mass.

### <Preparation of Pigment Dispersion>

### (Preparation Example 2-1)

Carbon black "#960" (product name, C.I. Pigment Black 7) from Mitsubishi Chemical Corporation was used as a black pigment, and a pigment dispersion K (pigment concentration: 20% by mass) was prepared by the following method. First, 150 g of the black pigment, 60 g of a pigment dispersant, 75 g of propylene glycol, and 19.4 g of a 34% by mass potassium hydroxide solution were charged in a 1.0 L intensive mixer (available from Nippon Eirich Co., Ltd.) and blended for 25 minutes at a rotor peripheral speed of 2.94 m/s and a pan peripheral speed of 1 m/s. Subsequently, 306 g of ion-exchange water was gradually added to the mixture in the vessel of the intensive mixer with continuous stirring, and then 12 g of propylene glycol and 127.5 g of ion-exchange water were further added so that the pigment concentration became 20% by mass, yielding an aqueous pigment dispersion (pigment dispersion K) with a pigment concentration of 20% by mass. The pigment dispersant used was the polymer (P-1) prepared according to Synthesis Example 1 in WO2018/190139.

### (Preparation Example 2-2)

"FASTOGEN BLUE SBG-SD" (product name, C.I. Pigment Blue 15:3) from DIC Corporation was prepared as a cyan pigment, and a pigment dispersion C (pigment concentration: 20% by mass) was prepared in the same way as in Preparation Example 2-1, except that the cyan pigment was used instead of the black pigment.

### (Preparation Example 2-3)

"FASTOGEN SUPER MAGENTA RY" (product name, C.I. Pigment Red 122) from DIC Corporation was prepared as a magenta pigment, and a pigment dispersion M (pigment concentration: 20% by mass) was prepared in the same way as in Preparation Example 2-1, except that the magenta pigment was used instead of the black pigment.

### (Preparation Example 2-4)

"FAST YELLOW 7413" (product name, C.I. Pigment Yellow 74) from SANYO COLOR WORKS, Ltd. was prepared as a yellow pigment, and a pigment dispersion Y (pigment concentration: 20% by mass) was prepared in the same way as in Preparation Example 2-1, except that the yellow pigment was used instead of the black pigment.

### <Preparation of Dyes>

The following dyes were prepared.
(Black Dye)
   - Acid Black 52
   - Acid Black 2
   - Direct Black 154
   - Direct Black 19
(Blue Dye)
   - Acid Blue 90
   - Acid Blue 104
   - Acid Blue 317
   - Direct Blue 301
   - Acid Blue 83
   - Acid Blue 103
   - Acid Blue 113
   - Acid Blue 123
   - Acid Blue 9
(Red Dye)
   - Acid Violet 48
   - Acid Red 80
   - Acid Red 97
   - Acid Red 151
   - Acid Red 249
   - Acid Red 289
   - Acid Red 94
   - Acid Red 52
(Yellow Dye)
   - Acid Yellow 42
   - Acid Yellow 17
   - Acid Yellow 40
   - Acid Yellow 23

### <Preparation of Aqueous Ink Composition>

### (Examples 1 to 46 and Comparative Examples 3 to 10)

The pigment dispersions and the resin dispersion produced as described above were used, and the pigment dispersions and dyes listed in Tables 1 to 7, the resin dispersion, propylene glycol, glycerol, triethanolamine, TEGO Wet 280 (from Evonik Industries AG, silicone surfactant), ACTICIDE B20 (from Thor Japan, preservative), ethylene urea, SURFYNOL 420 (from Evonik Industries AG, acetylene-based surfactant), AQUACER 515 (from BYK-Chemie GmbH, high-density oxidized polyethylene wax emulsion, melting point (Tm₂) 135°C), and distilled water were mixed and stirred to yield aqueous ink compositions of examples and comparative examples. The amount of the pigment dispersion was adjusted for each pigment so that the amount of the pigment was as listed in Tables 1 to 7. Specifically, the amount of the pigment dispersion was 28% by mass (pigment: 5.6% by mass) for the pigment dispersion K, 22% by mass (pigment: 4.3% by mass) for the pigment dispersion C, 30% by mass (pigment: 6.0% by mass) for the pigment dispersion M, and 17% by mass (pigment: 3.3% by mass) for the pigment dispersion Y. The amount of the dye was as listed in Tables 1 to 7. The amount of the resin dispersion was adjusted so that the resin content was 1.0% by mass. The amount of propylene glycol was 7 to 26% by mass so that the viscosity (32°C) of the aqueous ink composition was 4.8 Pa·s. The amounts of glycerol, triethanolamine, TEGO Wet 280, ACTICIDE B20, ethylene urea, SURFYNOL 420, and AQUACER 515 were 12.0% by mass, 0.2% by mass, 0.1% by mass, 0.1% by mass, 5.62% by mass, 1.00% by mass, and 1.0% by mass, respectively. The distilled water was added so that the total amount of the added components was 100% by mass. All of the amounts above are based on the total amount of the aqueous ink composition.

### (Comparative Examples 1 and 2)

As indicated in Table 7, the aqueous ink compositions of Comparative Examples 1 and 2 were produced in the same manner as in Examples 8 to 24, except that one of a pigment dispersion or a dye was not used.

### <Characteristics Evaluation>

The characteristics (image fastness, mottling, granularity, and white streaks) of the aqueous ink compositions (aqueous inkjet inks) of the examples and the comparative examples were evaluated by the method described below, and the evaluation results in Tables 1 to 7 were obtained. In the following evaluation, the supply pressure in printing was adjusted by setting the hydraulic head difference of the ink sub-tank from the head nozzle plate surface to +35 cm and the negative pressure to -5.0 kPa. The minimum distance between the ink ejection holes of the inkjet head and the recording medium (the distance (gap) from the surface (x) having ink ejection holes of the inkjet head to a position (y) where a normal to the surface (x) intersects the recording medium) was set to 1 mm. The driving conditions of the head include the standard voltage and the standard temperature of inkjet heads, and the droplet size was set to 18 pL.

### [Image Fastness Evaluation (Plain Paper)]

The aqueous ink compositions of the examples and the comparative examples were each charged in an inkjet head KJ4B-YH from KYOCERA Corporation, and 100% solid printing was performed on plain paper (NPI high-quality paper/Yatsushiro, Nippon Paper Industries, Co., Ltd., basis weight 52.3 g/m²), which was an ink-absorbent recording medium, to produce a coating of the aqueous ink composition. The resulting coating was dried at room temperature (25°C) for 12 hours (overnight). Subsequently, 0.03 g of distilled water was dropped onto the dried coating, and color bleeding was visually observed to evaluate the image fastness based on the following criteria.
5: No color bleeding on the printed surface, and no color bleeding is observed on the reverse side of plain paper.
4: Slight light color bleeding on the printed surface, but no color bleeding is observed on the reverse side of plain paper
3: Slight light color bleeding on the printed surface, and slight light color bleeding is also observed on the reverse side of plain paper.
2: Color bleeding on the printed surface, and color bleeding is also observed on the reverse side of plain paper.
1: Color bleeding on the printed surface, and color bleeding is also clearly observed on the reverse side of plain paper.

### [Image Fastness Evaluation (Coated Paper)]

The aqueous ink compositions of the examples and the comparative examples were each charged in an inkjet head KJ4B-YH from KYOCERA Corporation, and 100% solid printing was performed on OK TopKote+ (from Oji Paper Co., Ltd., basis weight 104.7 g/m²), which was a less-ink-absorbent recording medium, to produce a coating of the aqueous ink composition. The resulting coating was dried at room temperature (25°C) for 12 hours (overnight). Subsequently, the dried coating was rubbed 200 times with a load of 100 g/cm² using a Gakushin-type rubbing tester RT-300 (from DAIEI KAGAKU SEIKI MFG., CO., LTD.) with the same paper as the print base material as the rubbing finger. The degree of peeling of the coating was visually observed, and image fastness was evaluated based on the following criteria.
5: No scratches on the printed material, and no coloration was found on the rubbing paper.
4: Slight scratches on the printed material, and slight light coloration was also found on the rubbing paper.
3: Slight scratches on the printed material, and partial dark coloration was found on the rubbing paper.
2: Many scratches on the printed material, and partial dark coloration was found on the rubbing paper.
1: Many scratches on the printed material, and dark coloration was found over the entire surface of the rubbing paper.

### [Mottling Evaluation]

The aqueous ink compositions of the examples and the comparative examples were each charged in an inkjet head KJ4B-YH from KYOCERA Corporation, and 100% solid printing was performed on OK TopKote+ (from Oji Paper Co., Ltd., basis weight 104.7 g/m²), which was a less-ink-absorbent recording medium, to produce a coating of the aqueous ink composition. The resulting coating was dried for one second with a 9 kW near-infrared heater at a distance of approximately 8 cm from the base material. The dried coating was scanned with a scanner and the scanned image was numerically analyzed using image analysis software "ImageJ". The image was binarized in 8 bits, and the value (solid image quality) serving as an index of grayscale of the image was calculated. The upper limit of the value of the solid image quality was 100, and a value closer to 100 indicated a satisfactory coating free from mottling. The image was evaluated on a 5-point scale according to the value of the solid image quality.
5: Solid image quality is 90 or more and 100 or less
4: Solid image quality is 75 or more and less than 90
3: Solid image quality is 50 or more and less than 75
2: Solid image quality is 40 or more and less than 50
1: Solid image quality is less than 40

### [Granularity Evaluation]

The aqueous ink compositions of the examples and the comparative examples were each charged in an inkjet head KJ4B-YH from KYOCERA Corporation, and 50% solid printing was performed on OK TopKote+ (from Oji Paper Co., Ltd., basis weight 104.7 g/m²), which was a less-ink-absorbent recording medium, to produce a coating of the aqueous ink composition. The resulting coating was dried for one second with a 9 kW near-infrared heater at a distance of approximately 8 cm from the base material. Subsequently, the dried coating was numerically analyzed using an image quality analyzer "PIAS-II" from Quality Engineering Associates, Inc. Specifically, the graininess (the degree of granularity) of each coating was measured, and the degree of suppressing the granularity was evaluated based on the following criteria.
5: Graininess is less than 4.
4: Graininess is 4 or more and less than 5.
3: Graininess is 5 or more and less than 6.
2: Graininess is 6 or more and less than 7.
1: Graininess value is 7 or more.

### [White Streaks Evaluation]

The aqueous ink compositions of the examples and the comparative examples were each charged in an inkjet head KJ4B-YH from KYOCERA Corporation, and 100% solid printing was performed on OK TopKote+ (from Oji Paper Co., Ltd., basis weight 104.7 g/m²), which was a less-ink-absorbent recording medium, to produce a coating of the aqueous ink composition. The resulting coating was dried for one second with a 9 kW near-infrared heater at a distance of approximately 8 cm from the base material. The dried coating was scanned with a scanner, and the percentage of portions not coated with ink (streaks ratio) was calculated using image analysis software "ImageJ". The streaks ratio is the percentage of the area not coated with the aqueous ink to the area in which 100% solid printing was performed.
5: Streaks ratio of the printed material is less than 1%.
4: Streaks ratio of the printed material is 1% or more and less than 3%.
3: Streaks ratio of the printed material is 3% or more and less than 5%.
2: Streaks ratio of the printed material is 5% or more and less than 10%.
1: Streaks ratio of the printed material is 10% or more.

**[Table 1]**

| | | Example 1 | Example 2 | Example 3 | Example 4 | Example 5 | Example 6 | Example 7 |
|---|---|---|---|---|---|---|---|---|
| Kind of pigment dispersion | | K | K | K | K | K | K | K |
| Amount of pigment (% by mass) | | 5.6 | 5.6 | 5.6 | 5.6 | 5.6 | 5.6 | 5.6 |
| Amount of Dye (% by mass) | Acid Black 52 | 0.25 | 0.5 | 1.00 | - | - | - | - |
| | Acid Black 2 | - | - | - | 0.25 | - | 0.5 | - |
| | Direct Black 154 | - | - | - | - | 0.25 | - | 0.5 |
| Evaluation | Image fastness (plain paper) | 5 | 4 | 4 | 5 | 5 | 4 | 4 |
| | Image fastness (coated paper) | 5 | 5 | 4 | 5 | 5 | 5 | 5 |
| | Mottling | 5 | 5 | 5 | 5 | 5 | 5 | 5 |
| | Granularity | 4 | 5 | 5 | 4 | 4 | 5 | 5 |
| | White streaks | 5 | 5 | 5 | 5 | 5 | 5 | 5 |

**[Table 2]**

| | | Exampl e 8 | Exampl e 9 | Exampl e 10 | Exampl e 11 | Exampl e 12 | Exampl e 13 | Exampl e 14 | Exampl e 15 | Exampl e 16 | Exampl e 17 |
|---|---|---|---|---|---|---|---|---|---|---|---|
| Kind of pigment dispersion | | C | C | C | C | C | C | C | C | C | C |
| Amount of pigment (% by mass) | | 4.3 | 4.3 | 4.3 | 4.3 | 4.3 | 4.3 | 4.3 | 4.3 | 4.3 | 4.3 |
| Amount of Dye (% by mass) | Acid Blue 90 | 0.25 | 0.5 | 1. 00 | - | - | - | - | - | - | - |
| | Acid Blue 104 | - | - | - | 0.25 | - | - | - | - | - | - |
| | Acid Blue 317 | - | - | - | - | 0.25 | - | - | - | - | - |
| | Direct Blue 301 | - | - | - | - | - | 0.25 | - | - | - | - |
| | Acid Blue 83 | - | - | - | - | - | - | 0.25 | - | - | - |
| | Acid Blue 103 | - | - | - | - | - | - | - | 0.25 | - | - |
| | Acid Blue 113 | - | - | - | - | - | - | - | - | 0.25 | - |
| | Acid Blue 123 | - | - | - | - | - | - | - | - | - | 0.25 |
| Evaluatio n | Image fastness (plain paper) | 5 | 4 | 4 | 5 | 5 | 5 | 5 | 5 | 5 | 5 |
| | Image fastness (coated paper) | 5 | 5 | 4 | 5 | 5 | 5 | 5 | 5 | 5 | 5 |
| | Mottling | 5 | 5 | 5 | 5 | 5 | 5 | 5 | 5 | 5 | 5 |
| | Granularit y | 4 | 5 | 5 | 4 | 4 | 4 | 4 | 4 | 4 | 4 |
| | White streaks | 5 | 5 | 5 | 5 | 5 | 5 | 5 | 5 | 5 | 5 |

**[Table 3]**

| | | Example 18 | Example 19 | Example 20 | Example 21 | Example 22 | Example 23 | Example 24 |
|---|---|---|---|---|---|---|---|---|
| Kind of pigment dispersion | | C | C | C | C | C | C | C |
| Amount of pigment (% by mass) | | 4.3 | 4.3 | 4.3 | 4.3 | 4.3 | 4.3 | 4.3 |
| Amount of Dye (% by mass) | Acid Blue 90 | - | - | - | - | - | - | - |
| | Acid Blue 104 | 0. 5 | - | - | - | - | - | - |
| | Acid Blue 317 | - | 0.5 | - | - | - | - | - |
| | Direct Blue 301 | - | - | 0. 5 | - | - | - | - |
| | Acid Blue 83 | - | - | - | 0.5 | - | - | - |
| | Acid Blue 103 | - | - | - | - | 0. 5 | - | - |
| | Acid Blue 113 | - | - | - | - | - | 0.5 | - |
| | Acid Blue 123 | - | - | - | - | - | - | 0. 5 |
| Evaluation | Image fastness (plain paper) | 4 | 4 | 4 | 4 | 4 | 4 | 4 |
| | Image fastness (coated paper) | 5 | 5 | 5 | 5 | 5 | 5 | 5 |
| | Mottling | 5 | 5 | 5 | 5 | 5 | 5 | 5 |
| | Granularity | 5 | 5 | 5 | 5 | 5 | 5 | 5 |
| | White streaks | 5 | 5 | 5 | 5 | 5 | 5 | 5 |

**[Table 4]**

| | | Example 25 | Example 26 | Example 27 | Example 28 | Example 29 | Example 30 | Example 31 | Example 32 | Example 33 |
|---|---|---|---|---|---|---|---|---|---|---|
| Kind of pigment dispersion | | M | M | M | M | M | M | M | M | M |
| Amount of pigment (% by mass) | | 6.0 | 6.0 | 6.0 | 6.0 | 6.0 | 6.0 | 6.0 | 6.0 | 6.0 |
| Amount of Dye (% by mass) | Acid Violet 48 | 0.25 | 0. 5 | 1.00 | - | - | - | - | | |
| | Acid Red 80 | - | - | - | 0.25 | - | - | - | - | - |
| | Acid Red 97 | - | - | - | - | 0.25 | - | - | - | - |
| | Acid Red 151 | - | - | - | - | - | 0.25 | - | - | - |
| | Acid Red 249 | - | - | - | - | - | - | 0.25 | - | - |
| | Acid Red 289 | - | - | - | - | - | - | - | 0.25 | - |
| | Acid Red 94 | - | - | - | - | - | - | - | - | 0.25 |
| Evaluation | Image fastness (plain paper) | 5 | 4 | 4 | 5 | 5 | 5 | 5 | 5 | 5 |
| | Image fastness (coated paper) | 5 | 5 | 4 | 5 | 5 | 5 | 5 | 5 | 5 |
| | Mottling | 5 | 5 | 5 | 5 | 5 | 5 | 5 | 5 | 5 |
| | Granularity | 4 | 5 | 5 | 4 | 4 | 4 | 4 | 4 | 4 |
| | White streaks | 5 | 5 | 5 | 5 | 5 | 5 | 5 | 5 | 5 |

**[Table 5]**

| | | Example 34 | Example 35 | Example 36 | Example 37 | Example 38 | Example 39 |
|---|---|---|---|---|---|---|---|
| Kind of pigment dispersion | | M | M | M | M | M | M |
| Amount of pigment (% by mass) | | 6.0 | 6.0 | 6.0 | 6.0 | 6.0 | 6.0 |
| Amount of Dye (% by mass) | Acid Violet 48 | - | - | - | - | - | - |
| | Acid Red 80 | 0.5 | - | - | - | - | - |
| | Acid Red 97 | - | 0.5 | - | - | - | - |
| | Acid Red 151 | - | - | 0.5 | - | - | - |
| | Acid Red 249 | - | - | - | 0.5 | - | - |
| | Acid Red 289 | - | - | - | - | 0.5 | - |
| | Acid Red 94 | - | - | - | - | - | 0.5 |
| Evaluation | Image fastness (plain paper) | 4 | 4 | 4 | 4 | 4 | 4 |
| | Image fastness (coated paper) | 5 | 5 | 5 | 5 | 5 | 5 |
| | Mottling | 5 | 5 | 5 | 5 | 5 | 5 |
| | Granularity | 5 | 5 | 5 | 5 | 5 | 5 |
| | White streaks | 5 | 5 | 5 | 5 | 5 | 5 |

**[Table 6]**

| | | Example 40 | Example 41 | Example 42 | Example 43 | Example 44 | Example 45 | Example 46 |
|---|---|---|---|---|---|---|---|---|
| Kind of pigment dispersion | | Y | Y | Y | Y | Y | Y | Y |
| Amount of pigment (% by mass) | | 3.3 | 3.3 | 3.3 | 3.3 | 3.3 | 3.3 | 3.3 |
| Amount of Dye (% by mass) | Acid Yellow 42 | 0.25 | 0.5 | 1.00 | - | - | | - |
| | Acid Yellow 17 | - | - | - | 0.25 | - | 0.5 | - |
| | Acid Yellow 40 | - | - | - | | 0.25 | - | 0.5 |
| Evaluation | Image fastness (plain paper) | 5 | 4 | 4 | 5 | 5 | 4 | 4 |
| | Image fastness (coated paper) | 5 | 5 | 4 | 5 | 5 | 5 | 5 |
| | Mottling | 5 | 5 | 5 | 5 | 5 | 5 | 5 |
| | Granularity | 4 | 5 | 5 | 4 | 4 | 5 | 5 |
| | White streaks | 5 | 5 | 5 | 5 | 5 | 5 | 5 |

**[Table 7]**

| | | Comparat ive Example 1 | Comparat ive Example 2 | Comparat ive Example 3 | Comparat ive Example 4 | Comparat ive Example 5 | Comparat ive Example 6 | Comparat ive Example 7 | Comparat ive Example 8 | Comparat ive Example 9 | Comparat ive Example 10 |
|---|---|---|---|---|---|---|---|---|---|---|---|
| Kind of pigment dispersion | | C | - | K | K | C | C | M | M | Y | Y |
| Amount of pigment (% by mass) | | 4.3 | - | 5.6 | 5.6 | 4.3 | 4.3 | 6.0 | 6.0 | 3.3 | 3.3 |
| Amount of Dye (% by mass) | Direct Black 19 | - | - | 0.25 | 0.5 | - | - | - | - | - | - |
| | Acid Blue 90 | | 4.3 | - | - | - | - | - | - | - | - |
| | Acid Blue 9 | - | - | - | - | 0.25 | 0.5 | - | - | - | - |
| | Acid Red 52 | - | - | - | - | - | - | 0.25 | 0.5 | - | - |
| | Acid Yellow 23 | - | - | - | - | - | - | - | - | 0.25 | 0.5 |
| Evaluat ion | Image fastness (plain paper) | 5 | 1 | 2 | 1 | 2 | 1 | 2 | 1 | 2 | 1 |
| | Image fastness (coated paper) | 5 | 1 | 4 | 4 | 4 | 4 | 4 | 4 | 4 | 4 |
| | Mottling | 5 | 5 | 5 | 5 | 5 | 5 | 5 | 5 | 5 | 5 |
| | Granular ity | 2 | 5 | 4 | 5 | 4 | 5 | 4 | 5 | 4 | 5 |
| | White streaks | 5 | 5 | 5 | 5 | 5 | 5 | 5 | 5 | 5 | 5 |

## Claims

1. An aqueous ink composition for use in an inkjet recording method, the aqueous ink composition comprising:
an aqueous medium;
a pigment; and
a dye, wherein
a combination of the pigment and the dye is
a combination of a black pigment and at least one black dye selected from the group consisting of Acid Black 2, Acid Black 52, and Direct Black 154, or
a combination of a cyan pigment and at least one blue dye selected from the group consisting of Acid Blue 90, Acid Blue 104, Acid Blue 317, Direct Blue 301, Acid Blue 83, Acid Blue 103, Acid Blue 113, and Acid Blue 123, or
a combination of a magenta pigment and at least one red dye selected from the group consisting of Acid Violet 48, Acid Red 80, Acid Red 97, Acid Red 151, Acid Red 249, Acid Red 289, and Acid Red 94, or
a combination of a yellow pigment and at least one yellow dye selected from the group consisting of Acid Yellow 42, Acid Yellow 17, and Acid Yellow 40.

2. The aqueous ink composition according to claim 1, wherein the dye has an amount of 0.25 to 1.0% by mass of a total amount of the aqueous ink composition.

3. The aqueous ink composition according to claim 1 or 2, further comprising an acid-modified polypropylene resin.

4. The aqueous ink composition according to any one of claims 1 to 3, further comprising an oxidized polyethylene wax.

5. The aqueous ink composition according to claim 4, wherein the oxidized polyethylene wax has a melting point of 140°C or lower.

6. The aqueous ink composition according to any one of claims 1 to 5, further comprising an acetylene-based surfactant.

7. The aqueous ink composition according to any one of claims 1 to 6, wherein the combination of the pigment and the dye is a combination of a black pigment and a black dye.

8. The aqueous ink composition according to claim 7, wherein the black pigment is C.I. Pigment Black 7.

9. The aqueous ink composition according to any one of claims 1 to 6, wherein the combination of the pigment and the dye is a combination of a cyan pigment and a blue dye.

10. The aqueous ink composition according to claim 9, wherein the cyan pigment is C.I. Pigment Blue 15:3.

11. The aqueous ink composition according to any one of claims 1 to 6, wherein the combination of the pigment and the dye is a combination of a magenta pigment and a red dye.

12. The aqueous ink composition according to claim 11, wherein the magenta pigment is C.I. Pigment Red 122.

13. The aqueous ink composition according to any one of claims 1 to 6, wherein the combination of the pigment and the dye is a combination of a yellow pigment and a yellow dye.

14. The aqueous ink composition according to claim 13, wherein the yellow pigment is C.I. Pigment Yellow 74.

15. An ink set comprising:
the aqueous ink composition according to claim 7 or 8;
the aqueous ink composition according to claim 9 or 10;
the aqueous ink composition according to claim 11 or 12; and
the aqueous ink composition according to claim 13 or 14.

16. A printed material made by printing the aqueous ink composition according to any one of claims 1 to 14 on a surface of a recording medium.

17. A method of producing a printed material, the method comprising ejecting and printing the aqueous ink composition according to any one of claims 1 to 14 on a recording medium by an inkjet recording method in which a distance from a surface (x) having ink ejection holes of an inkjet head to a position (y) where a normal to the surface (x) intersects the recording medium is 1 mm or more.
